# EUROPEAN PATENT SPECIFICATION

(11) **EP 1 952 604 B1**
(45) Date of publication and mention of the grant of the patent: **22.04.2009**
(21) Application number: 06764189.4
(22) Date of filing: 17.07.2006
(51) Int. Cl.: H04L 29/06

(54) **METHOD, APPARATUS AND COMPUTER PROGRAM FOR ACCESS CONTROL**
VERFAHREN, VORRICHTUNG UND COMPUTERPROGRAMM ZUR ZUGANGSKONTROLLE
PROCEDE, APPAREIL ET PROGRAMME INFORMATIQUE POUR CONTROLE D'ACCES& x9;¨

(30) Priority: 26.11.2005 GB 0524111
(43) Date of publication of application: 06.08.2008
(73) Proprietor: International Business Machines Corporation, Armonk, NY 10504 (US)
(72) Inventor: APPLEBY, Richard, Mark, Warsash Hampshire SO31 9JE (GB); STANFORD-CLARK, Andrew, James, PO38 2LJ (GB)
(74) Representative: Pyecroft, Justine Nicola C.
(86) International application number: PCT/EP2006/064332
(87) International publication number: WO 2007/060030

(56) References cited:
- GB-A- 2 363 297
- ROSENBERG J ET AL: "draft-rosenberg-sip-pip-00.txt: SIP For Presence" IETF INTERNET DRAFT, 13 November 1998 (1998-11-13), pages 1-22, XP002325320

## Description

### Field of the Invention

The invention relates to access control.

### Background of the Invention

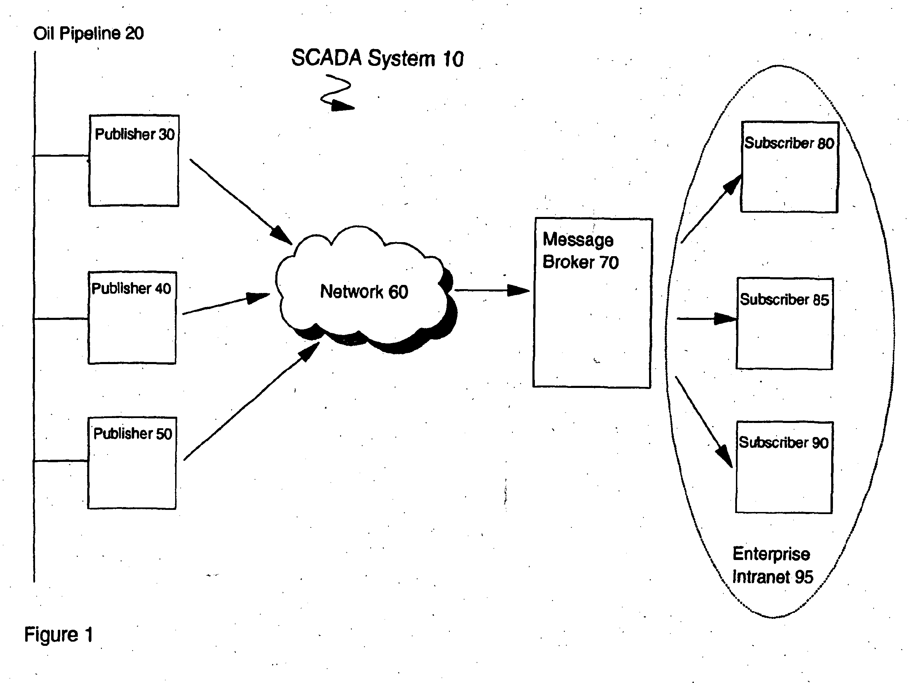

A server is often connected to two or more networks with each network connecting devices of a particular type to the server. Figure 1 shows an example of a Supervisory, Control And Data Acquisition (SCADA) system 10. Devices 30, 40 and 50 are connected to an oil pipeline 20. They may for example be sensory devices monitoring information such as oil flow rate and temperature. They publish information via network 60 to message broker 70. Message broker 70 is connected to this network via a first network adapter card and is also connected via a second network adapter card to an enterprise intranet 95 containing devices 80, 85 and 90 (neither adapter card is illustrated on the diagram). Such devices subscribe to receive information from the publishing devices and use such information to monitor the oil pipeline operation. Such a message broker is known from GB-A-2 363 297.

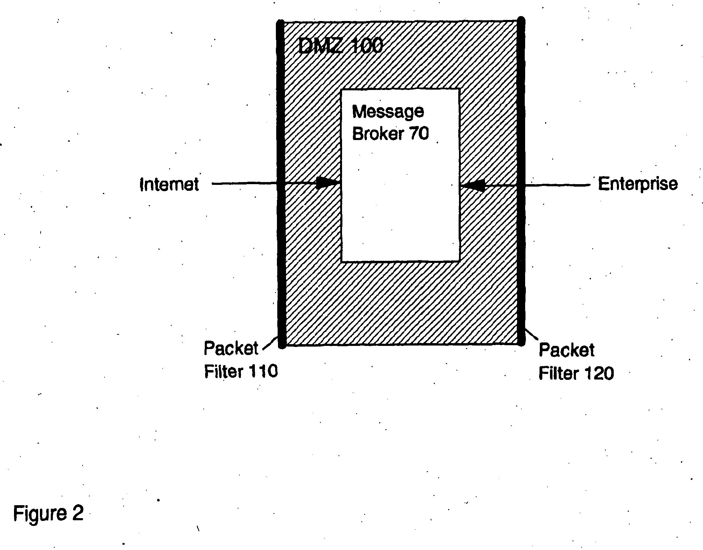

As shown in figure 2, the message broker 70 may be located in what is termed a "demilitarised zone" (DMZ) network 100. This zone acts as a buffer between an external network (e.g. the Internet) and an internal network (e.g. an Enterprise Intranet). Machines on both the external and the internal network may connect to a server in the DMZ, but only on certain ports, controlled by firewalls 110, 120. In the case of a publish/subscribe message broker used for a SCADA applications, machines connecting from the Internet may, by way of example, publish data, and machines connecting from the Enterprise intranet may, by way of example, subscribe to that incoming data. The broker will send such information over previously established connections between the broker and its subscribers. The DMZ may have a packet filter (firewall) 110 at the entrance which determines what IP addresses and ports in the DMZ an internet-connected machine is allowed to connect to. There is also a similar setup 120 between the message broker and the enterprise network.

Thus it should be appreciated that firewalls which police the traffic to and from a machine are known. Firewalls can be of numerous types. For example, a network layer firewall can be configured to filter traffic on the basis of source or destination IP address and source or destination port, and protocol type. Application layer firewalls are also known and these can be used to filter the traffic to and from particular applications. They may be used, for example, to prevent inappropriate content from being displayed in a web page.

A firewall is however just one part of a complete security solution. Other access control mechanisms are also well known in the art. For example, Virtual Private Networks (VPNs) provide trusted users with access to resources not available to general users. In the pub/sub arena Access Control Lists (ACLs) may be used to determine which users are allowed to publish on particular topics and which may subscribe to particular topics. Equally; access to a particular machine or application may only be allowed through a specific access port.

Security is also an issue when a server is accessed via only one network.

There is a need in the industry for an improved security mechanism addressing the situation where one server is being accessed by different devices. The server may be attached to one network only or may be connected to a plurality of networks, with devices on each network attempting to access the server.

### Summary of the Invention

According to a first aspect, there is provided a method for controlling access to a publish/subscribe message broker, the method comprising:
dividing publish/subscribe functions provided by the message broker into function sets; associating each function set with a communication path;
receiving a request at the message broker, the request arriving via one of a plurality of communications paths at the message broker and requesting access to a publish or subscribe function provided by the message broker;
determining which communication path is used;
identifying which function set the requested function is a part of;
determining whether the identified function set is associated with the communication path used;
and responsive to determining that the identified function set is associated with the communication path used, providing access to the requested publish or subscribe function.

In one embodiment, it is determined which port is used to access the message broker and it is then determined whether the identified function set is associated with the port used to access the broker.

In one embodiment, it is determined which communication network the request originates from and it is then determined whether the identified function set is associated with the communication network from which the request originates.

In one embodiment, the communication network from which the request originates is identifiable by an address comprising a network part and a host part. In this embodiment, the communication network with which the identified function set is associated is also identifiable by at least a network part. In order to determine whether the identified function set is associated with the communication network from which the request originates comprises, the network part of the communication network from which the request originates is compared with the network part of the communication network with which the identified function set is associated.

In one embodiment a subnet mask is used to determine whether the network part of both communication networks are the same.

In one embodiment, a request to connect to the broker is received. This results in a connection object being created for the connect request. Information contained within the connection object is then used to determine the communication network via which any future requests from the same requester arrive.

In one embodiment, if it is determined that the identified function set is not associated with the communication path used, then the request is discarded. The requester may be informed that the request has been disallowed.

In one embodiment access is provided to functions provided by a database on the basis of the communication path via which a request for a database function arrives.

According to another aspect, there is provided an apparatus for controlling access to a publish/subscribe message broker, the apparatus comprising:
means for dividing pub/sub functions provided by the message broker into function sets;
means for associating each function set with a communication path;
means for receiving a request at the message broker, the request arriving via one of a plurality of communications paths at the message broker and requesting access to a publish or subscribe function provided by the message broker;
means for determining which communication path is used;
means for identifying which function set the requested function is a part of;
means for determining whether the identified function set is associated with the communication path used;
and means, responsive to determining that the identified function set is associated with the communication path used, for providing access to the requested publish or subscribe function.

The invention may be implemented in computer software according to claim 15.

### Detailed Description of the Drawings

A preferred embodiment of the present invention will now be described, by way of example only, and with reference to the following drawings:
Figure 1 shows a server connected to both an external and an internal network in accordance with the prior art;
Figure 2 depicts the server of figure 1 located in a demilitarised zone (DMZ) network in accordance with the prior art;
Figure 3 illustrates the componentry of the present invention, in accordance with a preferred embodiment;
Figure 4a depicts, in accordance with a preferred embodiment of the present invention, the format of a message received at the server of figure 1;
Figure 4b illustrates, in accordance with a preferred embodiment of the present invention, the format of a connection object created when a device connects to the server of figure 1;
Figure 5a and 5b depict tabular information mapping server application functionality to user profiles in accordance with a preferred embodiment of the present invention;
Figure 5c illustrates a Venn diagram of the function sets provided in an exemplary embodiment; and
Figure 6 illustrates the processing of the present invention in accordance with a preferred embodiment.

### Detailed Description

Disclosed is a mechanism for controlling device access to functionality provided by a server, based on the network location of the device.

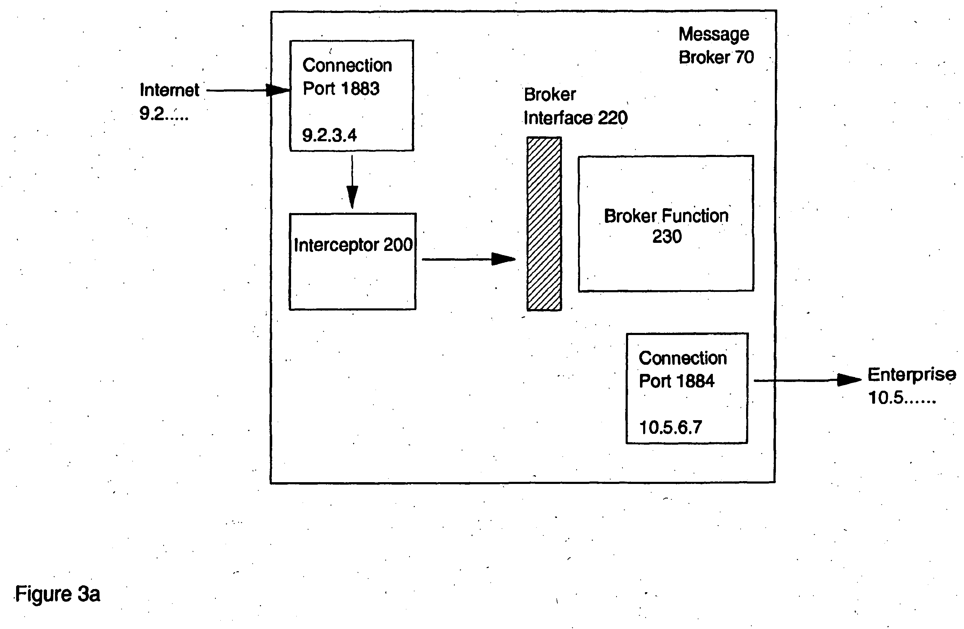

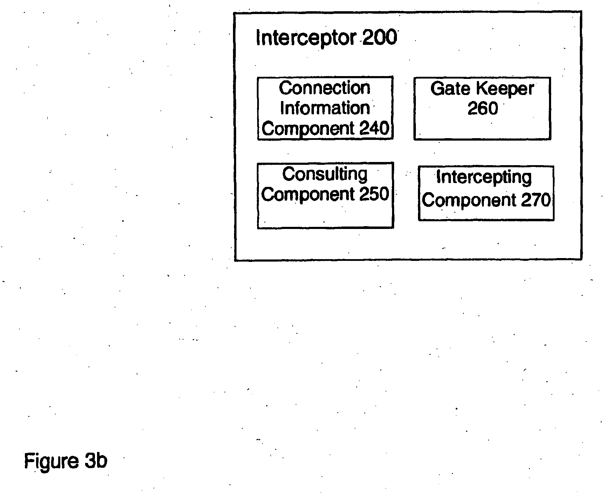

The invention will be described, in accordance with a preferred embodiment, with reference to figures 3 to 6. The figures should be read in conjunction with one another.

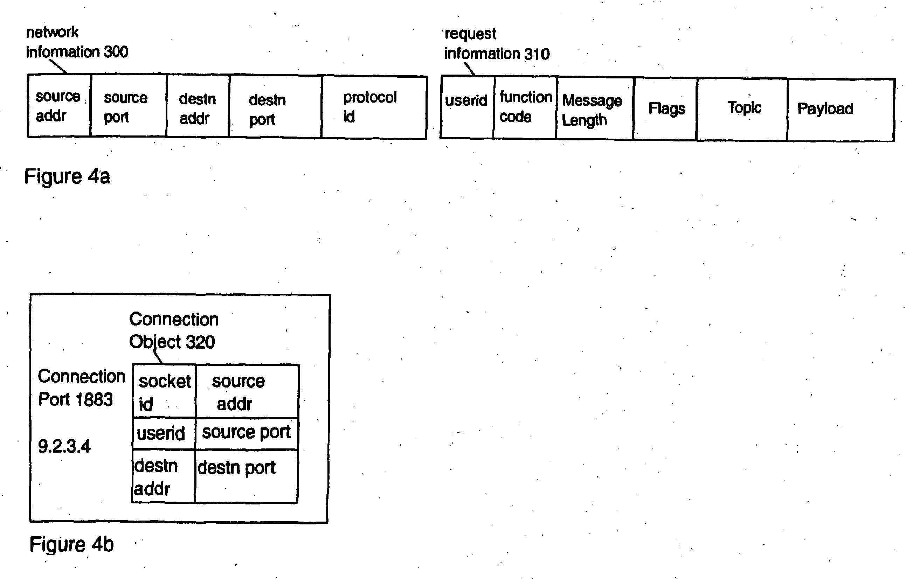

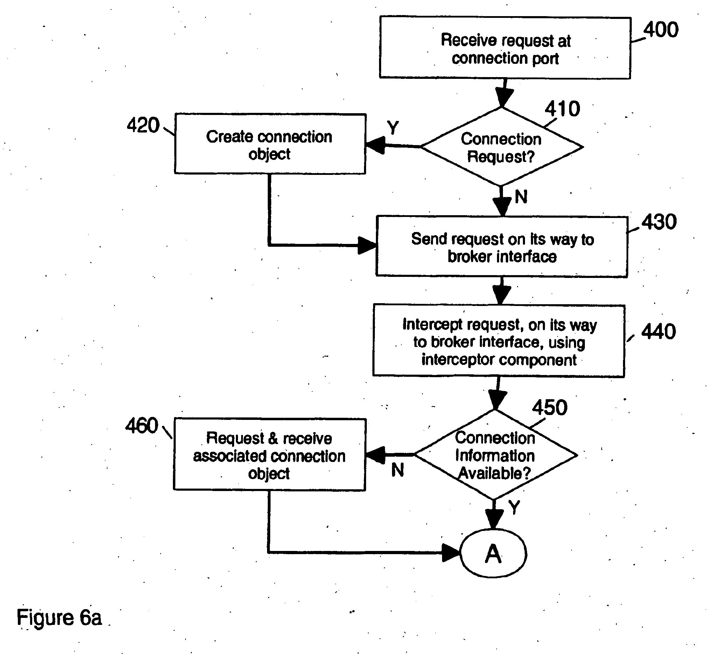

A request to perform some function provided by message broker 70 is received at step 400 (figure 6a). The request is received at a broker connection port (e.g. port 1883 which has IP address 9.2.3.4 on network 9.2.x.x. The format of such a request is depicted in figure 4a. The request has two parts to it: a network information part 300; and a request information part 310. Part 310 comprises information such as:
i) A userid;
ii) A function code which maps at the message broker to a broker provided function. Such a function is provided by component 230;
iii) A message length;
iv) Flags which may concern themselves with information such as Quality of Service (QoS) and message priority;
v) A message topic; and
vi) The main payload of the message.

The network information part 300 contains lower level information such as:
i) Source IP Address;
ii) Source Port;
iii) Destination Address;
iv) Destination Port; and
v) The identifier of the protocol being employed (e.g. TCP or UDP).

These elements are part of the protocol header. Note that the requesting device is not necessarily on the same network as that to which the broker is attached and thus the IP source address may be completely different.

If it is determined at step 410 that the newly received request is a connection request, it is the network information, along with the userid) that is used to create (at step 420) a connection object 320 (essentially state information) as shown in figure 4b. This connection object is stored at the receiving connection port. Each connection object also has a socket ID associated therewith.

Either way, processing reaches step 430 where the connection port sends the request on its way to broker interface 220. The broker interface is used to make calls to the functions 230 provided by the broker 70. At step 440, the request is intercepted, on its way to the broker interface, by interceptor 200, specifically intercepting component 270. Connection Information Component 240 determines at step 450 whether connection information for the intercepted request is available locally. If this is the first request seen from this particular client for the current connection session, then there will be no connection information available locally. In which case, the connection object associated with the request is requested from the connection port from which the request originated (step 460). The received connection object is then stored locally to the interceptor component for use with future requests (not shown). In another embodiment, connection information may simply be requested from the connection port for each request.

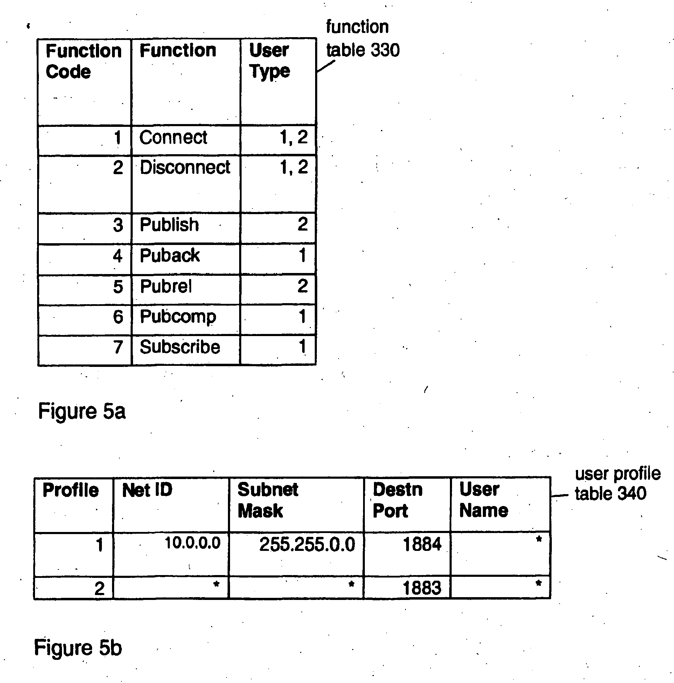

At step 470, user profile and function table information 330, 340 (as shown in figures 5a and 5b) is consulted (using consulting component 250) to determine whether the requested operation is permitted for the particular requesting device.

Function table 330 lists the broker functions provided by component 230 (figure 3a). Thus devices may, by way of example only, request the following operations:
i) Connect
ii) Disconnect
iii) Publish
iv) Publish_ack (subscriber can acknowledge receipt of a message)
v) Publish_release (publisher can release a once-and-once-only message)
vi) Publish_complete (subscriber can confirm completion of a once-and-once-only message)
vii) Subscribe

Request message function codes are each mapped by the table to one of the above operations.

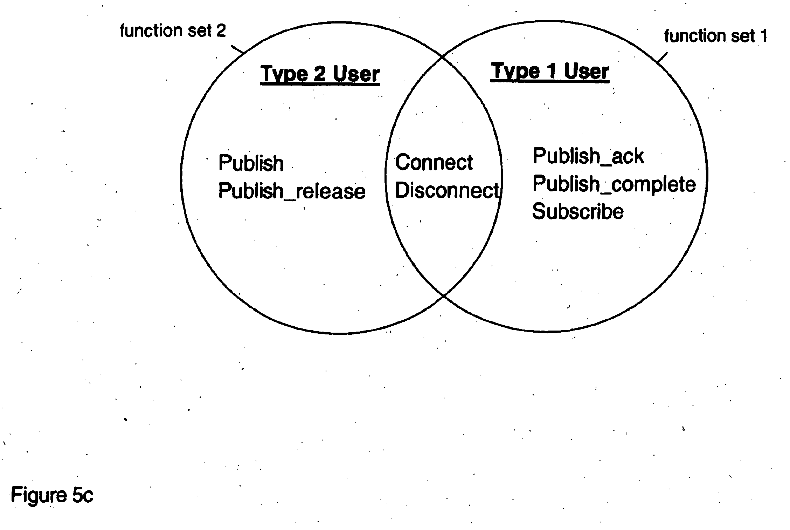

Whilst a device may request any of the functions, the network location of the device has, according to the preferred embodiment, an impact on whether the broker actually fulfils the requested operation. The third column in the function table 330 indicates the user profiles of permitted users for each operation. Thus, only a user of type 2 may publish a message, whereas only a user of type 1 may request the subscribe operation. Thus in effect, the application functionality of the message broker is divided into function sets with only certain types of user having access to each function set. This is illustrated by the Venn diagram in figure 5c. From this figure, it can be seen that the following functions are part of function set 1:
i) Publish_ack;
ii) Publish_complete;
iii) Subscribe;
iv) Connect; and
v) Disconnect

In function set 2 are:
i) Publish;
ii) Publish_release;
iii) Connect; and
iv) Disconnect.

Despite the fact that only two function sets are shown and that there are a plurality of functions in each set, this does not have to be the case. There may be more than two function sets. Also; a function set may only have one function.

The user profile table 340 defines what is meant by a user of type 1 when compared with a user of type 2. The table in the figure defines that the relevant information, when determining whether a requesting device is permitted to.access a function provided by the broker, is the specified Net ID (network ID)/subnet mask pair, the destination port via which the broker is accessed and the name of the requesting user. It can be seen from the figure that some the entries in a user profile may be wildcarded. In other words, it does not matter who the user is in profile 1.

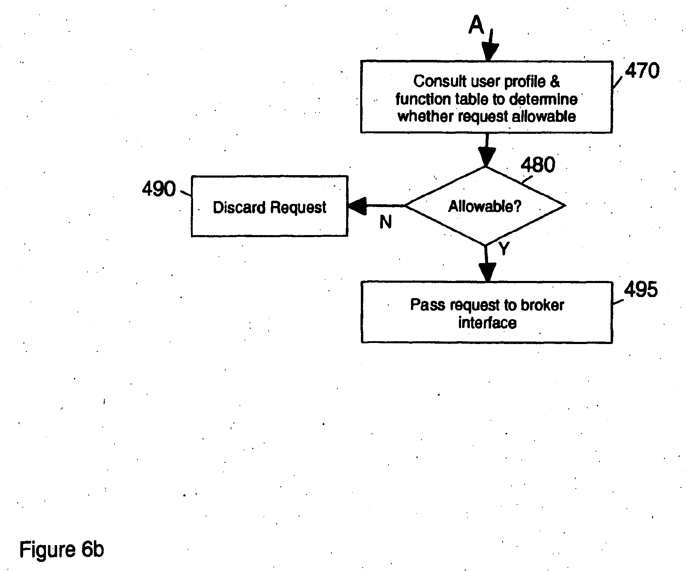

Referring back to the processing of figure 6b, the consulting component 250 extracts the function code from the request information part of the intercepted message. This is used to determine from the function table 330, the operation being requested by the user and the user types permitted to perform such an operation. By way of example; function 7 is requested. This maps in the function table to the publish operation which is permitted by users of type 1 only. The profile table 340 is then accessed to determine the required characteristics of type 1 users. A logical AND operation is performed between the Source IP address of the request (e.g. 10.0.56.77) and the subnet mask (e.g. 255.255.0.0). An IP address typically consists of a net ID (i.e. network part) and a node ID (i.e. a host/machine part). The AND operation is performed to extract the net ID part from the source IP address (in this example 10.0). This can then be compared with the Net ID specified in the profile. (The full address, 10.0.0.0, may be specified in the profile but the relevant (Net ID) part in this embodiment is the 10.0 - note in an alternative embodiment, only the network part is specified in the profile.) If the Net ID extracted from the source IP address is identical to the Net ID part specified in the profile, then this part of the profile is matched. In other words, the request comes from an appropriate subnet. In this example there is a match and consequently the request comes from an appropriate IP address range. It may however also be necessary to access the broker via a particular port, in which case this is also checked Note, the connection object requested (if not already available more locally) at step 460 can be used to determine the requesting source IP address, destination port etc. Thus a value is retrieved from the relevant connection object for each column in the table. Some automated rules may be applied. For example, the user name field has a wildcard in it. Consequently, there is no need to retrieve this value from the connection object. Equally, if the source IP address is retrieved and it is determined that the device does not fulfil this characteristic, there is no need to retrieve values for the other columns.

Note that the user profile table columns are exemplary only. The key point is that a user's access is to application functionality is being controlled based on one or more characteristics relevant to the network location of the user.

It will be appreciated from figures 4a and 4b that the request message and therefore the connection object created therefrom does not specify whether the source IP address falls within the range defined by the Net ID and subnet mask combination specified in the user profile. A comparison of the source IP address of the request with the specified Net ID/subnet combination however, will determine if it does lie within the range (see above). Subnets and subnet masks are,topics already well known in the art and so will not be discussed in any detail herein.

Information obtained from consultation step 470 is passed on to Gate Keeper 260; in other words, whether or not the request fulfils the required criteria. Gate Keeper 260 then uses such information to determine whether the request is allowable (step 480). If the request did not fulfil the required criteria (for example, it originated from a different subnet to that specified in relevant profile information), the request is discarded at step 490. This may mean that the request is simply not carried out, but more generally may also involve informing the requesting device that the request is not being allowed.

If on the other hand, the request is deemed to be allowable at step 480, then Gate Keeper 260 passes the request onto broker interface 220 through which the appropriate operation (publish in this example) may be requested. Hence forth the functionality of the message broker operates in a manner that is well known in the art.

To summarise, the application level protocol of the server is segmented by function into sets. Each of these sets is then associated with a profile which describes the requirements for accessing this set of functions. Referring back to the example of figure 1, such an invention may be used in a SCADA type environment to great effect. To recap, in such an environment sensors may access a message broker via an external network, whilst monitors may access the message broker via an internal network. With such a setup, it may not be desirable to allow monitors to publish, and sensors to subscribe to receive information. Rather than having to list the userid of every device and its access permissions, it is possible to perform access control on the basis of network location of the requesting device.

As indicated above, the use of source IP address, subnet, destination port and userid information in performing the access control is exemplary only.For example, destination port may be used on its own. In which case the functionality of the present invention may be built into firewall technology (e.g. the packet filters 110, 120 of figure 2). It is already known to restrict port access using current firewalls. Such firewall technology however can be extended to specify the type of operations that may be requested via a particular port.

Finally whilst the embodiment described makes reference to a server connected to two or more networks, the invention is not limited to such. For example, devices may access the server via a single network. The server may be listening on multiple ports on a single network. A firewall can be used to control which source IP address ranges are allowed to access which port on the server, in which case the consultation component only needs to consider the port number in its decision making. Alternatively the source IP address range and port can be specified in the profile and the consultation component can do the validation.

## Claims

1. A method for controlling access to a publish/subscribe message broker (70), the method comprising:
dividing publish/subscribe functions provided by the message broker into function sets;
associating each function set with a communication path;
receiving (400) a request at the message broker, the request arriving via one of a plurality of communications paths at the message broker and requesting access to a publish or subscribe function provided by the message broker;
determining (450) which communication path is used;
identifying (470) which function set the requested function is a part of;
determining whether the identified function set is associated with the communication path used; and
responsive to determining that the identified function set is associated with the communication path used, providing access (405) to the requested publish or subscribe function.

2. The method of claim 1, wherein the step of determining which communication path is used comprises:
determining which port is used to access the message broker,
and wherein the step of determining whether the identified function set is associated with the communication path used comprises:
determining whether the identified function set is associated with the port used to access the broker.

3. The method of claims 1 or 2, wherein the step of determining which communication path is used comprises:
determining the communication network from which the request originates,
and wherein the step of determining whether the identified function set is associated with the communication path used comprises:
determining whether the identified function set is associated with the communication network from which the request originates.

4. The method of claim 3, wherein the communication network from which the request originates is identifiable by an address comprising a network part and a host part and wherein the communication network with which the identified function set is associated is also identifiable by at least a network part, and wherein the step of determining whether the identified function set is associated with the communication network from which the request originates comprises:
comparing the network part of the communication network from which the request originates with the network part of the communication network with which the identified function set is associated.

5. The method of claim 4, wherein the comparing step comprises:
using a subnet mask to determine whether the network part of both communication networks are the same.

6. The method of any preceding claim, wherein a request to connect to the broker is received, the method comprising:
creating a connection object for the connect request; and
using information contained within the connection object to determine the communication network via which any future requests from the same requester arrive.

7. The method of any preceding claim comprising:
responsive to determining that the identified function set is not associated with the communication path used, discarding the request.

8. The method of claim 7 comprising:
informing the requester that the request has been disallowed.

9. The method of any preceding claim comprising providing access to functions provided by a database on the basis of the communication path via which a request for a database function arrives.

10. Apparatus for controlling access to a publish/subscribe message broker (70), the apparatus comprising:
means (230) for dividing pub/sub functions provided by the message broker into function sets;
means (200) for associating each function set with a communication path;
means (220) for receiving a request at the message broker, the request arriving via one of a plurality of communications paths at the message broker and requesting access to a publish or subscribe function provided by the message broker;
means (240) for determining which communication path is used;
means (250) for identifying which function set the requested function is a part of;
means for determining whether the identified function set is associated with the communication path used; and
means (260), responsive to determining that the identified function set is associated with the communication path used, for providing, access to the requested publish or subscribe function.

11. The apparatus of claim 10, wherein the.means for determining which communication path is used comprises:
means for determining which port is used to access the message broker,
and wherein the means for determining whether the identified function set is associated with the communication path used comprises:
means for determining whether the identified function set is associated with the port used to access the broker.

12. The apparatus of claims 10 or 11, wherein the means for determining which communication path is used comprises:
means for determining the communication network from which the request originates,
and wherein the means for determining whether the identified function set is associated with the communication path used comprises:
means for determining whether the identified function set is associated with the communication network from which the request originates.

13. The apparatus of claim 12, wherein the communication network from which the request originates is identifiable by an address comprising a network part and a host part and wherein the communication network with which the identified function set is associated is also identifiable by at least a network part, and wherein the means for determining whether the identified function set is associated with the communication network from which the request originates comprises:
means for comparing the network part of the communication network from which the request originates with the network part of the communication network with which the identified function set is associated.

14. The apparatus of claim 13, wherein the comparing means comprises:
means for using a subnet mask to determine whether the network part of both communication networks are the same.

15. A computer program comprising program code means adapted to perform the method of any of claims 1 to 9 when said program is run on a computer.

## Patentansprüche

1. Verfahren zur Zugangskontrolle zu einem Publish/Subscribe-Datenvermittler (message broker) (70), wobei das Verfahren Folgendes umfasst:
Unterteilen der Publish/Subscribe-Funktionen, die von dem Datenvermittler bereitgestellt werden, in Funktionssätze;
Zuweisen jedes Funktionssatzes zu einem Datenübertragungspfad;
Empfangen (400) einer Anforderung am Datenvermittler, wobei die Anforderung über einen aus einer Vielzahl von Datenübertragungspfaden am Datenvermittler eingeht und Zugriff auf eine Publish- oder Subscribe-Funktion anfordert, die von dem Datenvermittler bereitgestellt wird;
Ermitteln (450) des verwendeten Datenübertragungspfades;
Ermitteln (470) des Funktionssatzes, dem die angeforderte Funktion angehört;
Ermitteln, ob der ermittelte Funktionssatz dem verwendeten Datenübertragungspfad zugehörig ist; und
in Reaktion auf das Ermitteln, dass der ermittelte Funktionssatz dem verwendeten Datenübertragungspfad zugehörig ist, Bereitstellen des Zugriffs (405) auf die angeforderte Publish- oder Subscribe-Funktion.

2. Verfahren nach Anspruch 1, wobei der Schritt des Ermittelns des verwendeten Datenübertragungspfades Folgendes umfasst:
Ermitteln, welcher Anschluss zum Zugriff auf den Datenvermittler verwendet wird,
und wobei der Schritt des Ermittelns, ob der ermittelte Funktionssatz dem verwendeten Datenübertragungspfad zugehörig ist, Folgendes umfasst:
Ermitteln, ob der ermittelte Funktionssatz dem Anschluss zugehörig ist, der zum Zugriff auf den Datenvermittler verwendet wird.

3. Verfahren nach Anspruch 1 oder 2, wobei der Schritt des Ermittelns des verwendeten Datenübertragungspfades das Folgende umfasst:
Ermitteln des Datenübertragungs-Netzwerks, von dem die Anforderung ausgeht,
und wobei der Schritt des Ermittelns, ob der ermittelte Funktionssatz dem verwendeten Datenübertragungspfad zugehörig ist, Folgendes umfasst:
Ermitteln, ob der ermittelte Funktionssatz dem Datenübertragungspfad zugehörig ist, von dem die Anforderung ausgeht.

4. Verfahren nach Anspruch 3, wobei das Datenübertragungs-Netzwerk, von dem die Anforderung ausgeht, durch eine Adresse erkennbar ist, die einen Netzwerkteil und einen Hostteil enthält, und wobei das Datenübertragungs-Netzwerk, dem der ermittelte Funktionssatz zugehörig ist, auch durch wenigstens einen Netzwerkteil erkennbar ist, und wobei der Schritt des Ermittelns, ob der ermittelte Funktionssatz dem Datenübertragungs-Netzwerk zugehörig ist, von dem die Anforderung ausgeht, Folgendes umfasst:
Vergleichen des Netzwerkteils des Datenübertragungs-Netzwerks, von dem die Anforderung ausgeht, mit dem Netzwerkteil des Datenübertragungs-Netzwerks, dem der ermittelte Funktionssatz zugehörig ist.

5. Verfahren nach Anspruch 4, wobei der Schritt des Vergleichens Folgendes umfasst:
Verwenden einer Teilnetz-Maske zum Ermitteln, ob die Netzwerkteile der beiden Datenübertragungs-Netzwerke übereinstimmen.

6. Verfahren nach einem beliebigen vorangehenden Anspruch, worin eine Anforderung zum Verbinden mit dem Datenvermittler empfangen wird, wobei das Verfahren Folgendes umfasst:
Erzeugen eines Verbindungsobjekts für die Verbindungsanforderung; und
Verwenden der in dem Verbindungsobjekt enthaltenen Daten zum Ermitteln des Datenübertragungs-Netzwerks, über das alle zukünftigen Anforderungen von demselben Anforderer eingehen.

7. Verfahren nach einem vorangehenden Anspruch, das Folgende umfassend:
in Reaktion auf das Ermitteln, dass der ermittelte Funktionssatz nicht dem verwendeten Datenübertragungspfad zugehörig ist, Aussondern der Anforderung.

8. Verfahren nach Anspruch 7, das Folgende umfassend:
Benachrichtigen des Anforderers, dass die Anforderung ausgesondert wurde.

9. Verfahren nach einem vorangehenden Anspruch, das das Bereitstellen des Zugriffs auf Funktionen umfasst, die von einer Datenbank auf der Grundlage des Datenübertragungspfades, über den eine Anforderung für eine Datenbankfunktion eingeht, zur Verfügung gestellt wird.

10. Vorrichtung zur Zugangskontrolle zu einem Publish/Subscribe-Datenvermittler (70), wobei die Vorrichtung Folgendes umfasst:
ein Mittel (230) zum Unterteilen der von dem Datenvermittler bereitgestellten Publish-/Subscribe-Funktionen in Funktionssätze;
ein Mittel (200) zum Zuweisen jedes Funktionssatzes zu einem Datenübertragungspfad;
ein Mittel (220) zum Empfangen einer Anforderung an einem Datenvermittler, wobei die Anforderung über einen aus einer Vielzahl von Datenübertragungspfaden an dem Datenvermittler eingeht und Zugriff auf eine Publish- oder Subscribe-Funktion anfordert, die von dem Datenvermittler zur Verfügung gestellt wird;
ein Mittel (240) zum Ermitteln des verwendeten Datenübertragungspfades;
ein Mittel (250) zum Erkennen des Funktionssatzes, dem die angeforderte Funktion angehört;
ein Mittel zum Ermitteln, ob der ermittelte Funktionssatz dem verwendeten Datenübertragungspfad zugehörig ist; und
in Reaktion auf das Ermitteln, dass der ermittelte Funktionssatz dem verwendeten Datenübertragungspfad zugehörig ist, ein Mittel (260) zum Bereitstellen des Zugriffs auf die angeforderte Publish- oder Subscribe-Funktion.

11. Vorrichtung nach Anspruch 10, wobei das Mittel zum Ermitteln des verwendeten Datenübertragungspfades Folgendes umfasst:
ein Mittel zum Ermitteln des Anschlusses, der für den Zugriff auf den Datenvermittler verwendet wird, und wobei das Mittel zum Ermitteln, ob der ermittelte Funktionssatz dem Datenübertragungspfad zugehörig ist, Folgendes umfasst:
ein Mittel zum Ermitteln, ob der ermittelte Funktionssatz dem Anschluss zugehörig ist, der für den Zugriff auf den Datenvermittler verwendet wird.

12. Vorrichtung nach Anspruch 10 oder 11, wobei das Mittel zum Ermitteln des verwendeten Datenübertragungspfades Folgendes umfasst:
ein Mittel zum Ermitteln des Datenübertragungs-Netzwerks, von dem die Anforderung ausgeht,
und wobei das Mittel zum Ermitteln, ob der ermittelte Funktionssatz dem verwendeten Datenübertragungspfad zugehörig ist, Folgendes umfasst:
Mittel zum Ermitteln, ob der ermittelte Funktionssatz dem Datenübertragungs-Netzwerk zugehörig ist, von dem die Anforderung ausgeht.

13. Vorrichtung nach Anspruch 12, wobei das Datenübertragungs-Netzwerk, von dem die Anforderung ausgeht, mittels einer Adresse erkennbar ist, die einen Netzwerkteil und einen Host-Teil enthält, und wobei das Datenübertragungs-Netzwerk, dem der ermittelte Funktionssatz zugehörig ist, ebenso durch wenigstens einen Netzwerkteil erkennbar ist, und wobei das Mittel zum Ermitteln, ob der ermittelte Funktionssatz dem Datenübertragungs-Netzwerk zugehörig ist, von dem die Anforderung ausgeht, Folgendes umfasst: ein Mittel zum Vergleichen des Netzwerkteils des Datenübertragungs-Netzwerks, von dem die Anforderung ausgeht, mit dem Netzwerkteil des Datenübertragungs-Netzwerks, dem der ermittelte Funktionssatz zugehörig ist.

14. Vorrichtung nach Anspruch 13, wobei das Vergleichsmittel das Folgende umfasst:
ein Mittel zum Verwenden einer Teilnetz-Maske, um festzustellen, ob die Netzwerkteile der beiden Datenübertragungs-Netzwerke übereinstimmen.

15. Computerprogramm, das Programmcode-Mittel enthält, die zum Ausführen des Verfahrens nach einem der Ansprüche 1 bis 9 geeignet sind, wenn das Programm auf einem Computer ausgeführt wird.

## Revendications

1. Procédé pour contrôler l'accès à un broker de messages à mode publication/abonnement (70), le procédé comprenant :
la division des fonctions publication/abonnement fourni par le broker de message en des jeux de fonctions ;
l'association de chaque jeu de fonctions à un chemin de communication;
la réception (400) d'une requête au broker de message, la requête arrivant au broker de message, via l'un d'une pluralité de chemins de communication, et demandant l'accès à une fonction publication ou abonnement, fournie par le broker de message ;
la détermination (450) du chemin de communication utilisé;
l'identification (470) du jeu de fonctions dont la fonction requise fait partie;
la détermination du fait que le jeu de fonctions identifié est associé au chemin de communication utilisé ; et
en réponse à la détermination du fait que le jeu de fonctions identifié est associé au chemin de communication utilisé, fourniture d'un accès (405) à la fonction publication/abonnement requise.

2. Procédé selon la revendication 1, dans lequel l'étape de détermination du chemin de communication utilisé comprend :
la détermination du port utilisé pour accéder au broker de messages,
et dans lequel l'étape de détermination du fait que le jeu de fonctions identifié est associé au chemin de communication utilisé comprend :
la détermination du fait que le jeu de fonctions identifié est associé au port utilisé pour accéder au broker.

3. Procédé selon la revendication 1 ou 2, dans lequel l'étape de détermination du chemin de communication utilisé comprend :
la détermination du réseau de communication d'où la requête provient,
et dans lequel l'étape de détermination du fait que le jeu de fonctions identifié est associé au chemin de communication utilisé comprend :
la détermination du fait que le jeu de fonctions identifié est associé au réseau de communication d'où la requête provient.

4. Procédé selon la revendication 3, dans lequel le réseau de communication d'où la requête provient est identifiable par une adresse comprenant une partie réseau et une partie hôte, et dans lequel le réseau de communication avec lequel le jeu de fonctions identifié est associé est également identifiable par au moins une partie réseau, et dans lequel l'étape de détermination du fait que le jeu de fonctions identifié est associé au réseau de communication d'où la requête provient comprend :
la comparaison de la partie réseau du réseau de communication d'où la requête provient avec la partie réseau du réseau de communication avec lequel le jeu de fonctions identifié est associé.

5. Procédé selon la revendication 4, dans lequel l'étape de comparaison comprend :
l'utilisation d'un masque de sous-réseau, pour déterminer si la partie réseau des deux réseau de communication est identique.

6. Procédé selon l'une quelconque des revendications précédentes, dans lequel une requête de connexion au broker est reçue, le procédé comprenant :
la création d'un objet connexion pour la requête de connexion ; et
l'utilisation de l'information contenue dans l'objet connexion pour déterminer le réseau de communication via lequel d'éventuelles requêtes futures, provenant du même émetteur de requêtes, arrivent.

7. Procédé selon l'une quelconque des revendications précédentes, comprenant :
en réponse à la détermination du fait que le jeu de fonctions identifié n'est pas associé au chemin de communication utilisé, éliminer la requête.

8. Procédé selon la revendication 7, comprenant :
l'information, à destination de l'émetteur de requête, de ce que la requête a été refusée.

9. Procédé selon l'une quelconque des revendications précédentes, comprenant la fourniture d'un accès à des fonctions fournies par une base de données, sur la base du chemin de communication via lequel une requête pour une base de données arrive.

10. Dispositif de contrôle d'accès à un broker de messages à mode publication/abonnement (70), le dispositif comprenant :
des moyens (230), pour la division des fonctions publication/abonnement fourni par le broker de message en des jeux de fonctions ;
des moyens (200), pour l'association de chaque jeu de fonctions à un chemin de communication ;
des moyens (220), pour la réception d'une requête au broker de message, la requête arrivant au broker de message, via l'un d'une pluralité de chemins de communication, et demandant l'accès à une fonction publication ou abonnement, fournie par le broker de message ;
des moyens (240), pour la détermination du chemin de communication utilisé ;
des moyens (250), pour l'identification du jeu de fonctions dont la fonction requise fait partie ;
des moyens, pour la détermination du fait que le jeu de fonctions identifié est associé au chemin de communication utilisé ; et
des moyens (260), pour en réponse à la détermination du fait que le jeu de fonctions identifié est associé au chemin de communication utilisé, fournir un accès à la fonction publication/abonnement requise.

11. Dispositif selon la revendication 10, dans lequel les moyens, pour la détermination du chemin de communication utilisé, comprennent :
des moyens, pour la détermination du port utilisé pour accéder au broker de messages,
et dans lequel les moyens, pour la détermination du fait que le jeu de fonctions identifié est associé au chemin de communication utilisé comprennent :
des moyens, pour la détermination du fait que le jeu de fonctions identifié est associé au port utilisé pour accéder au broker.

12. Dispositif selon la revendication 10 ou 11, dans lequel les moyens, pour détermination du chemin de communication utilisé comprennent :
des moyens, pour la détermination du réseau de communication d'où la requête provient,
et dans lequel les moyens, pour la détermination du fait que le jeu de fonctions identifié est associé au chemin de communication utilisé comprennent :
des moyens, pour la détermination du fait que le jeu de fonctions identifié est associé au réseau de communication d'où la requête provient.

13. Dispositif selon la revendication 12, dans lequel le réseau de communication d'où la requête provient est identifiable par une adresse comprenant une partie réseau et une partie hôte, et dans lequel le réseau de communication avec lequel le jeu de fonctions identifié est associé est également identifiable par au moins une partie réseau, et dans lequel les moyens de détermination du fait que le jeu de fonctions identifié est associé au réseau de communication d'où la requête provient comprennent:
des moyens, pour la comparaison de la partie réseau du réseau de communication d'où la requête provient avec la partie réseau du réseau de communication avec lequel le jeu de fonctions identifié est associé.

14. Dispositif selon la revendication 13, dans lequel les moyens de comparaison comprennent :
des moyens, pour l'utilisation d'un masque de sous-réseau, pour déterminer si la partie réseau des deux réseau de communication est identique.

15. Programme informatique, comprenant des moyens de code de programme, adaptés pour mettre en oeuvre le procédé selon l'une quelconque des revendications 1 à 9, lorsque ledit programme fonctionne sur un ordinateur.
